# EUROPEAN PATENT APPLICATION

(11) **EP 1 086 886 A1**
(43) Date of publication of application: **28.03.2001**
(21) Application number: 99203108.8
(22) Date of filing: 22.09.1999
(51) Int. Cl.: B62J 1/16, B62K 27/12

(54) **Auxiliary device for the attachment of a children's carrier on a bicycle**

(71) Applicant: Metaalwarenfabriek Melkert B.V., 2806 CE Gouda (NL)
(72) Inventor: Melkert, Pieter, 2821 BJ Stolwijk (NL)
(74) Representative: Van Assen, Jan Willem Bernard

(57) **Abstract**

The invention relates to an auxiliary device comprising a fastening plate with fastening rods, which are fastened to the luggage carrier, in which the children's carrier is fastened with hooks to the fastening plates.
The invention relates to a fastening plate (3) which is flat on the upper side and is provided with parts (4) hanging down over the luggage carrier, in which possible sliding is obviated by the connecting rods (5) which are pivotally attached to the back fork (7) of the bicycle (1 ).The upward movement of the fastening plate is obviated by clamping elements which fix the fastening plate to the luggage carrier.

The fastening plate can be executed for fastening a hauling ball for a trailer, whereas slits are present for bands or straps.

## Description

The invention relates to an auxiliary device comprising a fastening plate with fastening rods, which are fastened to the luggage carrier, in which the children's carrier is fastened with hooks to the fastening plates. In many cases the children's carriers are more or less permanently fastened to the bicycle. The disadvantage is that in some cases it is difficult to attach bicycle bags or such to the bicycle.

The invention now relates to a fastening plate which is flat on the upper side with parts hanging down from the luggage carrier, in which possible sliding is obviated by the connection rods which are pivotally connected with the back fork of the bicycle. The upward movement of the fastening plate is obviated by clamping plates which fix the fastening plate to the luggage carrier. In this way the fastening plate can be mounted on different types of bicycles. By moving the clamping elements over the back fork of the bicycle it is possible to move the fastening plate forwards or backwards.

The fastening plate can be executed for fastening a hauling ball for a trailer, whereas slits are present for bands or straps.

The invention will now be described referring to the drawing.

Fig. 1 shows a perspective view of the auxiliary device mounted on a bicycle.

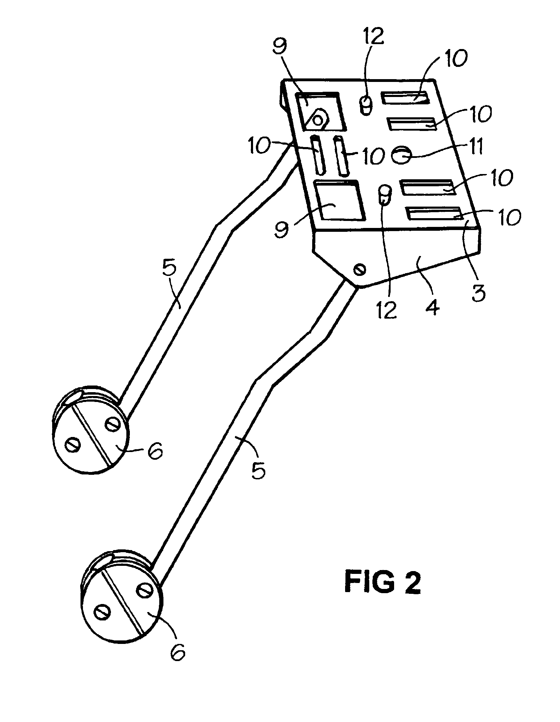

Fig. 2 shows a perspective view of the auxiliary device on larger scale.

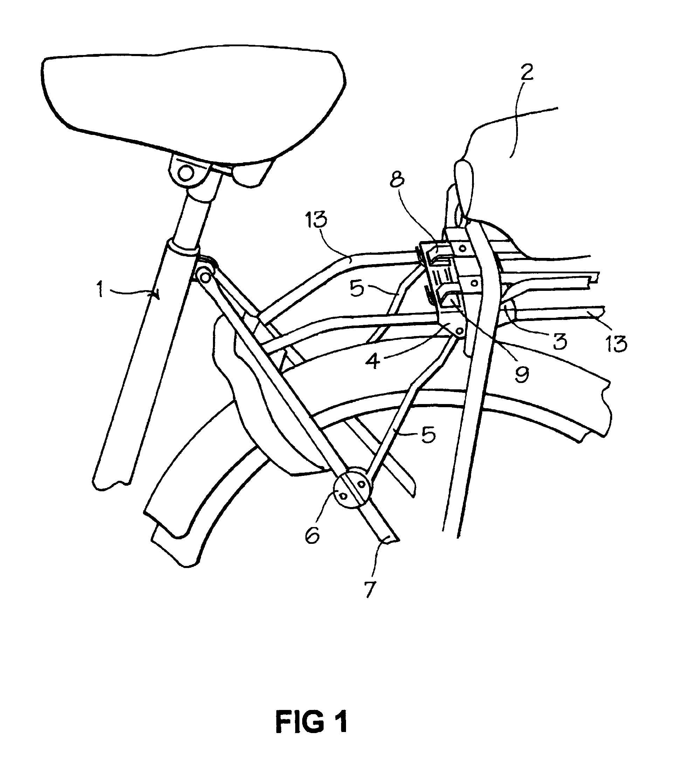

Fig. 1 shows the bicycle (1) on which the children's carrier (2) is fastened by means of the auxiliary device. The fastening plate (3) has a part (4) hanging down, on which the rods (5) are pivotally connected, which are pivotally connected by means of the clamping elements (6) to the back fork (7) of the bicycle (1). The hooks (8) of the children's carrier (2) are partly bent down with an upward pointing hook part and cooperate fittingly with the openings (9) of the fastening plate (3).

In the fastening plate (3) there are moreover openings (10) for bands or straps, the opening (11) for a possible hauling ball for a trailer, the openings (12) for balls for clamping strips (not shown) to clamp the fastening plate (3) on the luggage carrier (13).

By moving the clamping elements (6) over the back fork (7) it is possible to vary the place of the fastening plate (3).

## Claims

1. Auxiliary device with fastening plate for a children's carrier on a bicycle, characterized in that the fastening plate (3) is provided with parts (4) hanging down on which the connecting rods (5) is pivotally fastened witch is connected with a clamping element (6) to the back fork (7) of the bicycle (1).

2. Auxiliary device with fastening plate for a children's carrier on a bicycle, according to claim 1, characterized in that the fastening plate (3) is provided with openings (9) which cooperates with hooks (8) of the children's carrier (2), in which the hooks (8) have a downwardly bent part and an upwardly pointing hook end.

3. Auxiliary device with fastening plate for a children's carrier on a bicycle, according to claim 1 and 2, characterized in that the fastening plate (3) is provided with an opening (11) for the attachment of a hauling ball for trailers.

4. Auxiliary device with fastening plate for a children's carrier on a bicycle, according to claim 1, 2 and 3, characterized in that the fastening plate (3) is provided with slits (10) for bands or straps.
